# FASCICULE DE BREVET EUROPEEN

(11) **EP 0 626 704 B1**
(45) Date de publication et mention de la délivrance du brevet: **19.03.1997**
(21) Numéro de dépôt: 94401138.6
(22) Date de dépôt: 24.05.1994
(51) Int. Cl.: H01G 7/02

(54) **Dispositifs de fabrication d'électrets**
Vorrichtung zur Herstellung von Elektreten
Apparatus for manufacturing of electrets

(30) Priorité: 26.05.1993 FR 9306313
(43) Date de publication de la demande: 30.11.1994
(73) Titulaire: Lewiner, Jacques, 92210 Saint-Cloud (FR); Perino, Didier, F-92500 Rueil Malmaison (FR)
(72) Inventeur: Lewiner, Jacques, 92210 Saint-Cloud (FR); Perino, Didier, F-92500 Rueil Malmaison (FR)
(74) Mandataire: Burbaud, Eric

(56) Documents cités:
- EP-A- 0 119 706
- IEEE TRANSACTIONS ON INDUSTRY APPLICATIONS, vol.IA, no.20, Novembre 1984, NEW YORK, USA pages 1623 - 1626 HEINZ VON SEGGERN 'Improved Surface Voltage Uniformity on Electrets Obtained by Modified Corona Charging Method'
- PATENT ABSTRACTS OF JAPAN vol. 6, no. 77 (E-106) 14 Mai 1982 & JP-A-57 014 296

## Description

L'invention est relative aux électrets, c'est-à-dire aux diélectriques polarisés électriquement en permanence par le fait qu'ils sont porteurs de charges électriques permanentes.

Elle concerne plus particulièrement ceux, de ces électrets, qui se présentent sous la forme de feuilles ou couches minces utilisables notamment pour la constitution de transducteurs électromécaniques (microphones, accéléromètres, capteurs de pression, etc.) ou de relais électrostatiques.

Elle vise plus particulièrement encore les dispositifs de fabrication des électrets du genre en question.

Avec les modes de fabrication connus de ces électrets, il est très difficile d'obtenir une répartition homogène des charges électriques portées : la densité de ces charges est beaucoup plus faible au voisinage des bords de l'électret qu'au centre, voire nulle.

Cette absence d'homogénéité se traduit par un certain nombre d'inconvénients, en particulier au plan de la sensibilité et/ou de la stabilité des transducteurs ou relais constitués à l'aide des électrets concernés.

Pour remédier à cet inconvénient, c'est-à-dire obtenir une répartition homogène de la charge électrique implantée sur toute la face chargée de l'électret, y compris jusqu'à ses bords, il a déjà été proposé de disposer à une petite distance de ladite face, lors de sa charge, un diaphragme porteur de charges électriques du même signe que celles en cours d'implantation, l'ouverture de ce diaphragme correspondant à la plage à charger.

Ce procédé exige un positionnement relatif précis dans toutes les directions entre le diaphragme et la face à charger et, dans le mode de réalisation qui a été décrit pour ledit procédé (article de Heinz Von Seggern paru aux pages 1623 à 1626 de IEEE TRANSACTIONS ON INDUSTRY APPLICATIONS, vol. 1A - 20, novembre 1984, New-York), la plage à charger, unique et écartée du diaphragme d'une distance de l'ordre du millimètre, présentait une surface très supérieure à 10 cm².

L'invention a pour but, surtout, d'améliorer les procédés et dispositifs de charge en question, en les rendant en particulier facilement applicables à la fabrication des électrets en feuilles minces qui présentent des dimensions relativement petites, la plus grande de ces dimensions étant inférieure à 1 cm et même de préférence à 6 mm : c'est le cas de nombreux électrets en SiO₂, qui se présentent souvent sous la forme de petites plaquettes rectangulaires dont les dimensions sont de l'ordre de 2 à 3 mm.

A cet effet, les dispositifs de fabrication d'électrets du genre en question comprennent encore une électrode pour supporter le diélectrique qui est destiné à être chargé afin de devenir un électret, des moyens pour engendrer des charges électriques et les entraîner vers le diélectrique, et un cadre disposé à proximité du pourtour du diélectrique, cadre constitué et monté de façon à porter, au moins au cours de la charge du diélectrique, des charges électriques de même signe que celles en cours d'implantation dans le diélectrique, et ils sont caractérisés en ce que ledit cadre forme un seul bloc avec l'électrode.

Ainsi, il n'existe plus aucun risque de défaut de positionnement relatif du cadre par rapport à l'électrode, lors de la mise en charge du diélectrique, l'ensemble du montage réalisé est robuste et se prête facilement à la fabrication simultanée de pluralités d'électrets de petite taille, avec une homogénéité remarquable de la répartition des charges électriques implantées, jusqu'aux marges des faces chargées.

Dans des modes de réalisation préférés, on a recours en outre à l'une et/ou à l'autre des dispositions suivantes :
- le cadre est conducteur de l'électricité et isolé de l'électrode par une couche solide isolante de l'électricité,
- dans un dispositif selon l'alinéa précédent, le cadre fait partie intégrante d'une plaque conductrice supportant elle-même l'électrode avec interposition de la couche isolante,
- dans un dispositif selon l'alinéa qui précède le précédent, le cadre est percé d'une ouverture recevant l'électret et est placé sur l'électrode avec interposition de la couche isolante,
- le cadre est constitué en un diélectrique susceptible de recevoir en permanence des charges électriques, tout comme le diélectrique que ce cadre entoure,
- le cadre fait lui-même partie d'une grille ou feuille ou couche perforée destinée à la fabrication simultanée d'une pluralité d'électrets et dont il délimite l'une des mailles.

L'invention comprend, mises à part les dispositions ci-dessus, certaines autres dispositions qui s'utilisent de préférence en même temps et dont il sera plus explicitement question ci-après.

En référence au dessin ci-annexé, on décrit ci-après, à titre illustratif et bien entendu non limitatif, trois modes de réalisation de l'invention.

Les trois figures, de ce dessin, montrent schématiquement, respectivement, trois dispositifs utilisés pour charger des électrets et établis conformément à la présente invention.

Dans chacun de ces dispositifs, on trouve un diélectrique 1 à charger, qui se présente sous la forme d'une feuille ou couche mince, avantageusement constituée en SiO₂, et une plaque-électrode 2 mise à la masse sur laquelle est placé le diélectrique, plaque qui peut être constituée en silicium.

Les ions 3 à implanter dans le diélectrique 1 pourraient être créés dans l'environnement de ce diélectrique de toute façon désirable, par exemple à l'aide d'un canon à électrons, ou d'un champ électrique d'entraînement.

Dans chacun des modes de réalisation ici décrits, les ions 3 sont créés par effet Corona, et on accélère ces ions 3 vers le diélectrique à travers une grille 4 portée, à l'aide d'une source de tension 5, à un potentiel proche du potentiel de surface que l'on désire obtenir pour l'électret. Les lignes de champ électrique suivies par les ions 3 sont visibles en 6.

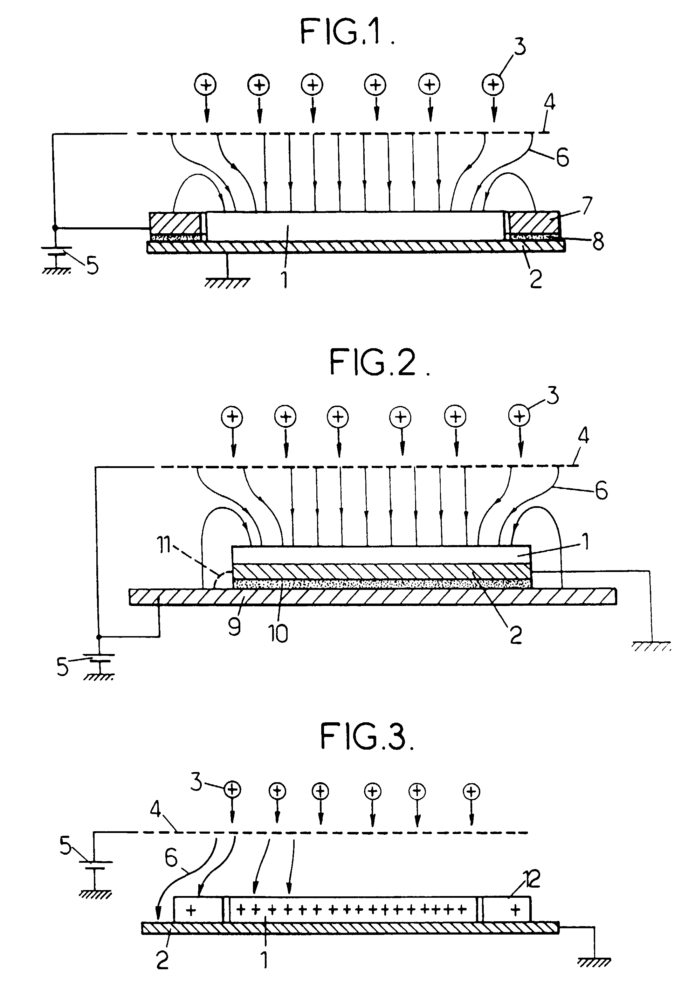

Dans le premier mode de réalisation schématisé sur la figure 1, on voit en outre un cadre conducteur 7 placé sur l'électrode 2 avec interposition d'une couche isolante 8, autour du diélectrique 1, de façon quasi-jointive.

Ce cadre 7 est connecté électriquement à la grille 4 de sorte qu'il est porté au même potentiel que cette dernière.

La présence du cadre 7 porté au potentiel indiqué le long des bords du diélectrique 1 empêche toute déviation ou fuite des ions 3 en direction de la périphérie débordante de l'électrode 2.

Au contraire, ledit cadre 7 joue le même rôle que la grille 4 en ce qui concerne le refoulement des ions 3 en direction du diélectrique 1.

En définitive, la répartition de la charge électrique permanente implantée dans l'électret final est homogène sur toute la plage chargée de cet électret, y compris dans ses marges.

Le cadre 7 peut être fixé définitivement à l'électrode 2, la connexion électrique entre ce cadre et cette électrode pouvant être établie après la mise en charge de l'électret.

Si, comme supposé ci-dessus, l'électret 1 est constitué en SiO₂ et l'électrode-substrat 1, en silicium, le cadre 7 peut être celui qui est communément utilisé pour assurer un collage final entre ledit substrat 1 et une autre feuille ou plaque de silicium (non représentée) recouvrant le tout et convenablement micro-usinée, ledit cadre 7 étant alors avantageusement constitué en or ou alliage d'or.

Selon une variante, on peut prévoir que le cadre 7 n'est placé sur l'électrode 1 que d'une manière provisoire et amovible après la mise en charge.

Dans le mode de réalisation qui vient d'être décrit, la valeur finale U₁ obtenue pour le potentiel de surface de l'électret est en principe égale au potentiel auquel était portée la grille 4 au cours de la charge.

En pratique, cette valeur finale peut être légèrement supérieure au potentiel de la grille, car les ions accélérés peuvent avoir une énergie cinétique suffisante pour franchir la grille même lorsque le champ électrique existant entre celle-ci et la surface de l'électret est devenu nul, venant ainsi se déposer sur l'électret même après établissement de ladite égalité.

Dans un tel cas, il convient de porter le potentiel du cadre 7 à une valeur finale U₂ légèrement supérieure à U₁ au cours de la mise en charge.

A titre d'exemple, si l'électrode 1 est portée à un potentiel U₀ nul, on peut donner respectivement aux tensions U₁ et U₂ les valeurs 200 et 220 Volts.

Dans le second mode de réalisation schématisé sur la figure 2, les dimensions de l'électrode 1 sur laquelle est plaqué le diélectrique à charger sont identiques à celles de ce diélectrique et l'ensemble est déposé sur un substrat conducteur 9 avec interposition d'une couche isolante 10.

Le substrat 9 est porté au potentiel U₁ défini ci-dessus et il est dimensionné de façon à déborder autour de l'ensemble 1,2.

Ce sont alors les bords de ce substrat qui jouent ici le rôle du cadre 7 ci-dessus : ces bords ne sont pas disposés rigoureusement "autour" du diélectrique 1, c'est-à-dire au même niveau que celui-ci, mais le rôle électrique de correction qu'ils jouent vis-à-vis des ions 3 périphériques, en les repoussant vers le diélectrique 1, est tout à fait analogue au précédent.

Ici encore, on peut prévoir avantageusement des moyens, schématisés par le trait interrompu 11, pour relier électriquement le substrat 9 à l'électrode 2 après la mise en charge de l'électret 1.

Dans le troisième mode de réalisation schématisé sur la figure 3, le cadre, visible en 12, est constitué en un matériau diélectrique identique ou analogue à celui constitutif du diélectrique 1, c'est-à-dire capable comme ce dernier de pièger les charges électriques projetées sur sa surface.

Tout se passe alors comme si le cadre 12 constituait lui-même la périphérie d'un diélectrique agrandi et mis en charge de manière classique.

La principale différence entre les deux processus réside en ce que, dans le cas présent, ladite "périphérie" du diélectrique agrandi, qui est moins chargée que le reste de ce diélectrique -reste qui constitue la portion centrale du diélectrique agrandi, destinée à devenir l'électret- peut être séparée de ce reste à la fin de la charge, étant constituée ici par le cadre 12 lui-même, indépendant de l'électret formé 1.

On peut observer que, dans ce dernier cas, tout comme dans ceux des figures 1 et 2, le cadre 12 est, au cours de la charge du diélectrique 1, porteur de quelques charges électriques de même sens que celles à implanter dans ce diélectrique, charges propres à s'opposer électriquement aux "fuites", vers l'électrode 2, des charges destinées à être implantées dans la périphérie du diélectrique.

On peut observer en outre que la présence du cadre 12 éloigne par elle-même de l'électrode 2 les bords du diélectrique 1, ce qui réduit d'autant la tendance aux fuites ci-dessus signalées.

Des dispositions sont avantageusement prises pour permettre la séparation effective du cadre 12 après charge de l'électret 1, une couche anti-adhésive (non représentée), pouvant être interposée entre ce cadre et l'électrode 2.

L'épaisseur du cadre 7 ou 12 peut être égale à celle de l'électret 1 ; elle peut également être inférieure ou supérieure à celle de l'électret 1.

La largeur de l'intervalle compris entre l'électret 1 et le cadre 7 ou 12 qui l'entoure peut être nulle elle peut être non nulle, mais est alors de préférence inférieure à la distance séparant la grille 4 de la face en regard de l'électret 1.

En suite de quoi, et quel que soit le mode de réalisation adopté, on obtient finalement des procédés et dispositifs de mise en charge d'électrets permettant d'obtenir très simplement pour ces derniers une répartition remarquablement homogène de la charge électrique implantée, y compris jusqu'aux bords de ces électrets et donc d'excellentes qualités de sensibilité et/ou stabilité, et ce même si lesdits électrets sont de petite taille et présentent une dimension maximum inférieure à 6 mm.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où l'électrode qui porte le diélectrique à charger serait portée à un potentiel fixe U₀ autre que celui, nul, de la masse,
- et celles où le cadre ferait lui-même partie d'une grille ou feuille ou couche perforée destinée à la fabrication simultanée d'une pluralité d'électrets et dont il délimiterait l'une des mailles.

## Revendications

1. Dispositif pour fabriquer un électret se présentant sous la forme d'une feuille ou couche diélectrique mince chargée électriquement en permanence, comprenant une électrode (2) pour supporter le diélectrique (1) qui est destiné à être chargé pour devenir un électret, des moyens pour engendrer des charges électriques et les entraîner vers le diélectrique, et un cadre disposé à proximité du pourtour du diélectrique, cadre constitué et monté de façon à porter, au moins au cours de la charge du diélectrique, des charges électriques de même signe que celles en cours d'implantation dans le diélectrique, caractérisé en ce que ce cadre (7, 12) forme un seul bloc avec l'électrode (2).

2. Dispositif de fabrication d'électret selon la revendication 1, caractérisé en ce que le cadre (7) est conducteur de l'électricité et isolé de l'électrode (2) par une couche solide isolante de l'électricité (8, 10).

3. Dispositif de fabrication d'électret selon la revendication 2, caractérisé en ce que le cadre (7) fait partie intégrante d'une plaque conductrice (9) supportant elle-même l'électrode (2) avec interposition de la couche isolante (10).

4. Dispositif de fabrication d'électret selon la revendication 2, caractérisé en ce que le cadre (7) est percé d'une ouverture recevant l'électret (1) et est placé sur l'électrode (2) avec interposition de la couche isolante (8).

5. Dispositif de fabrication d'électret selon la revendication 1, caractérisé en ce que le cadre (12) est constitué en un diélectrique susceptible de recevoir en permanence des charges électriques, tout comme le diélectrique (1) que ce cadre entoure.

6. Dispositif de fabrication d'électret selon l'une quelconque des revendications 4 et 5, caractérisé en ce que le cadre (7,12) fait lui-même partie d'une grille ou feuille ou couche perforée destinée à la fabrication simultanée d'une pluralité d'électrets (1) et dont il délimite l'une des mailles.

## Patentansprüche

1. Einrichtung zur Herstellung eines Elektrets, das in Form einer dünnen, permanent elektrisch geladenen, dielektrischen Folie oder Schicht vorliegt, umfassend eine Elektrode (2) zum Tragen des Dielektrikums (1), das dazu bestimmt ist, geladen zu werden, um ein Elektret zu werden, Mittel, um elektrische Ladungen zu erzeugen und diese zu dem Dielektrikum hin zu treiben, sowie eine in der Nähe des Umfangs des Dielektrikums vorgesehene Umrahmung, wobei die Umrahmung derart beschaffen und angeordnet ist, daß sie zumindest beim Laden des Dielektrikums elektrische Ladungen gleichen Vorzeichens wie die bei der Implantation in das Dielektrikum verwendeten trägt,
**dadurch gekennzeichnet**,
daß die Umrahmung (7, 12) einen einzigen Block mit der Elektrode (2) bildet.

2. Einrichtung zur Elektretherstellung nach Anspruch 1,
**dadurch gekennzeichnet**,
daß die Umrahmung (7) ein Elektrizitätsleiter ist und mittels einer festen, elektrisch isolierenden Schicht (8, 10) von der Elektrode (2) isoliert ist.

3. Einrichtung zur Elektretherstellung nach Anspruch 2,
**dadurch gekennzeichnet**, daß die Umrahmung (7) integraler Teil einer leitenden Platte (9) ist, welche ihrerseits unter Zwischenanordnung der isolierenden Schicht (10) die Elektrode (2) trägt.

4. Einrichtung zur Elektretherstellung nach Anspruch 2,
**dadurch gekennzeichnet**,
daß die Umrahmung (7) von einer das Elektret (1) aufnehmenden Öffnung durchsetzt ist und unter Zwischenanordnung der isolierenden Schicht (8) auf der Elektrode (2) angeordnet ist.

5. Einrichtung zur Elektretherstellung nach Anspruch 1,
**dadurch gekennzeichnet**,
daß die Umrahmung (12) genauso wie das von der Umrahmung umgebene Dielektrikum (1) von einem Dielektrikum gebildet ist, welches elektrische Ladungen permanent aufnehmen kann.

6. Einrichtung zur Elektretherstellung nach einem der Ansprüche 4 und 5,
**dadurch gekennzeichnet**,
daß die Umrahmung (7, 12) ihrerseits Teil eines perforierten Gitters oder einer perforierten Folie oder einer perforierten Schicht ist, das bzw. die zur gleichzeitigen Herstellung einer Mehrzahl von Elektreten (1) bestimmt ist und von dem bzw. von der sie eine der Maschen begrenzt.

## Claims

1. A device for manufacturing an electret in the form of a thin dielectric layer or sheet that is permanently charged electrically, the device comprising an electrode (2) for supporting the dielectric (1) that is to be charged in order to become an electret, means for generating electric charge and for entraining it towards the dielectric, and a frame disposed close to the periphery of the dielectric, which frame is constituted and installed in such a manner as to carry electric charge of the same sign as the charge being implanted in the dielectric, at least while the dielectric is being charged, the device being characterized in that said frame (7, 12) forms a single block with the electrode (2).

2. A device for manufacturing an electret according to claim 1, characterized in that the frame (7) is electrically conductive and is insulated from the electrode (2) by a solid electrically-insulating layer (8, 10).

3. A device for manufacturing an electret according to claim 2, characterized in that the frame (7) forms an integral portion of a conductive plate (9) itself supporting the electrode (2) with the insulating layer (10) being interposed therebetween.

4. A device for manufacturing an electret according to claim 2, characterized in that the frame (7) is pierced by an opening in which it receives the electret (1) and is placed on the electrode (2) with the insulating layer (8) being interposed therebetween.

5. A device for manufacturing an electret according to clam 1, characterized in that the frame (12) is constituted by a dielectric suitable for receiving permanent electric charge, as is the dielectric (1) surrounded by said frame.

6. A device for manufacturing an electret according to any one of claims 4 and 5, characterized in that the frame (7, 12) itself forms a portion of a grid or perforated layer or sheet designed for simultaneous manufacture of a plurality of electrets (1), and defines one of the meshes thereof.
